# EUROPÄISCHE PATENTSCHRIFT

(11) **EP 3 246 437 B1**
(45) Veröffentlichungstag und Bekanntmachung des Hinweises auf die Patenterteilung: **31.10.2018**
(21) Anmeldenummer: 16170505.8
(22) Anmeldetag: 19.05.2016
(51) Int. Cl.: D01H 7/86, D02G 3/38

(54) **VORRICHTUNG ZUM VERDREHEN EINES FIBRILLIERTEN BÄNDCHENS**
DEVICE FOR TURNING A FIBRILLATED RIBBON
DISPOSITIF DE BLOCAGE D'UNE PETITE BANDE FIBRILLEE

(43) Veröffentlichungstag der Anmeldung: 22.11.2017
(73) Patentinhaber: Tarkett Inc., Farnham, Quebec 2N 1J7 (CA)
(72) Erfinder: Morton-Finger, Jürgen, 69469 Weinheim (DE)
(74) Vertreter: Betten & Resch

(56) Entgegenhaltungen:
- EP-A1- 1 126 051
- WO-A2-2010/102921
- WO-A2-2012/164059

## Beschreibung

### Gebiet der Erfindung

Die Erfindung betrifft eine Vorrichtung zum Verdrehen eines fibrillierten Bändchens zur Herstellung eines Kunstrasens.

### Hintergrund der Erfindung

Bekannte Kunstrasen werden entweder aus Monofilamenten oder aus flachen, fibrillierten Bändchen hergestellt.

Flache und fibrillierte Bändchen können beispielsweise wie folgt hergestellt werden: Normalerweise wird eine ca. 2 m breite Folie extrudiert, diese wird dann mit einem Messerbalken in ca. 20 mm breite Streifen geschnitten. Danach werden die Bändchen wieder erhitzt und linear verstreckt.

Die verstreckten Bändchen werden dann über einen Fibrilator geschnitten. Beim Fibrillieren wird das Bändchen in Längsrichtung abschnittsweise geschnitten, so dass sich beim Auseinanderziehen in die Breite des fibrillierten Bändchens durch die einzelnen Schritte ein Wabenmuster bildet.

Nach dem Fibrillieren wird das Bändchen wieder erwärmt und um 10-30 % kontrolliert geschrumpft (Relaxieren). Ein fibrilliertes Bändchen weist eine Breite von 6 - 12 mm und eine Dicke von 0,1 - 0,14 mm auf. Die Form des fibrillierten Bändchens ist rechteckig und flach, wenn es nicht in die Breite gezogen wird. Am Ende der Anlage wird dann dieses fibrillierte Bändchen auf eine Spule aufgewickelt. Pro Spule wird immer ein fibrilliertes Bändchen aufgewickelt.

Solch eine Spule wird im nächsten Produktionsschritt verwendet, in dem die fibrillierten Bändchen in einem Tufting-Prozess zu einem Kunstrasen-Teppich getuftet werden. Dabei müssen die fibrillierten Bändchen durch die Nadeln der Tufting-Maschine geführt werden. Die fibrillierten Bändchen werden dabei durch die Öse der Tufting-Nadel geführt, die Öse hat typischerweise einen Durchmesser von ca. 5 - 6 mm.

Da die flachen und fibrillierten Bändchen bis zu 12 mm breit sein können, bleiben sie somit in der Öse der Nadel hängen.

Um dies zu verhindern, werden die Bändchen typischerweise gezwirnt. Bei diesem Zwirnprozess wird das Bändchen mit ca. 30 Umdrehungen pro Meter verdreht, wodurch das flache Bändchen in eine eher runde Form gebracht wird, um auf diese Weise besser durch die Öse der Nadel zu passen.

Durch das Zwirnen wird das Bändchen zusätzlich gestresst, so dass teilweise mechanische Performanz wie Festigkeit und Dehnung negativ beeinflusst werden.

Außerdem entstehen durch den zusätzlichen Produktionsschritt Zwirnen erheblich höhere Produktionskosten.

Alternativ wurde vorgeschlagen, das flache und fibrillierte Bändchen mit einem Umwindegarn zu umschlingen, wodurch das flache und fibrillierte Bändchen zusammengefaltet wird. Es hat sich aber hierbei herausgestellt, dass die Faltung zu ungleichmäßig ist und das Bändchen teilweise immer noch in der Öse der Nadel hängen bleibt.

Eine Aufgabe der vorliegenden Erfindung ist es deshalb, auf kostengünstige Art und Weise eine gleichmäßigere und stärkere Verformung des flachen und fibrillierten Bändchens bei Erhaltung der mechanischen Performanz bereitzustellen, um das Bändchen ohne Hängebleiben durch die Öse der Tufting-Nadel führen zu können.

EP 1 126 051 A1 offenbart ein kontinuierliches Verfahren zur Herstellung eines Fadens oder Strangs aus einem Kunststoff- oder Textilmaterial zur Herstellung von Spezialgeweben, insbesondere Kunstrasen, umfassend das Extrudieren eines Kunststoffmaterials zur Erzielung eines vorgegebenen Stranges oder Flachfadens und eines schraubenförmigen Wickelabschnitts. Die Extrusions- und Wickelabschnitte arbeiten synchron.

WO 2010/102921 A2 betrifft ein Verfahren und eine Vorrichtung zur Herstellung eines Rasengarns für Kunstrasen. Gemäß der Erfindung werden mehrere Monofilamente oder Bänder aus einem jeweiligen Polymermaterial in zwei parallelen Extrusionsverfahren hergestellt, wobei das Rasengarn durch Vereinigen mehrerer Monofilamente oder Bänder, die im ersten Extrusionsverfahren erhalten werden, mit mehreren im zweiten Extrusionsverfahren erhaltenen Monofilamenten oder Bändern gebildet wird. Um insbesondere die Elastizität eines aus dem Rasengarn hergestellten Kunstrasenteppichs zu verbessern, werden die in einem der Extrusionsverfahren erhaltenen Monofilamente oder Bänder vor der Vereinigung gekräuselt, wobei die gekräuselten Monofilamente oder Bänder und die flachen Monofilamente oder Bänder parallel nebeneinander erzeugt werden und in einer Wickelstation mittels eines Bindefadens verbunden werden.

### Zusammenfassung der Erfindung

Die Erfindung ist in den unabhängigen Ansprüchen definiert. Bevorzugte Ausführungsformen sind in den abhängigen Ansprüchen definiert.

Gemäß einer Ausführungsform umfasst eine Vorrichtung zum Verdrehen eines flachen, fibrillierten Bändchens für die Herstellung eines Kunstrasens: eine Hohlwelle mit einer zentralen Drehachse im Hohlraum der Hohlwelle, wobei die Hohlwelle derart gestaltet ist, dass das flache, fibrillierte Bändchen fortlaufend durch den Hohlraum der Hohlwelle durchführbar ist; ein an der Hohlwelle angebrachtes, schwenkbar gelagertes Auslenkelement mit einem Auslenkbereich, wobei eine Schwenkachse des Auslenkelements von der zentralen Drehachse der Hohlwelle so versetzt angeordnet ist, dass der Auslenkbereich des Auslenkelements bei einer Drehung der Hohlwelle um deren zentrale Drehachse durch die resultierende Zentrifugalkraft nach außen von der zentralen Drehachse weg in eine Auslenkposition ausgelenkt ist, wodurch das flache, fibrillierte Bändchen an dem Auslenkbereich anliegt und von dem Auslenkbereich auf einer konzentrischen Bahn um die zentrale Drehachse geführt ist; und ein Begrenzungselement, das so an der Hohlwelle angeordnet ist, dass das flache, fibrillierte Bändchen in der Auslenkposition des Auslenkelements auch an dem Begrenzungselement anliegt und die Auslenkung des flachen, fibrillierten Bändchens nach außen dadurch begrenzt ist, wobei in der Auslenkposition eine im Wesentlichen orthogonal zur zentralen Drehachse ausgerichtete Durchführfläche zwischen dem Auslenkbereich und dem Begrenzungselement derart gestaltet ist, dass das flache, fibrillierte Bändchen beim Durchführen durch die Durchführfläche verformt wird.

Dadurch dass das flache und fibrillierte Bändchen fortlaufend durch die Hohlwelle und gleichzeitig von dem Auslenkelement auf einer konzentrischen Bahn um die zentrale Drehachse der Hohlwelle geführt wird, wird eine äußerst gleichmäßige Verdrehung des flachen und fibrillierten Bändchens bereitgestellt. Zusätzlich wird eine äußerst gleichmäßige Verformung durch das fortlaufende Durchführen durch die Durchführfläche erzielt, die zusammen mit der Verdrehung eine Form des zuvor flachen Bändchens bereitstellt, die sehr gut durch die Öse der Tufting-Nadei durchführbar ist.

Gemäß einer weiteren Ausführungsform umfasst die Vorrichtung ferner ein flächiges Befestigungselement zur Anbringung des Auslenkelements an die Hohlwelle, wobei das Befestigungselement an einem Austrittssende der Hohlwelle, aus dem das fortlaufende Bändchen aus der Hohlwelle austritt, angebracht ist und im Wesentlichen orthogonal zur zentralen Drehachse ausgerichtet ist; wobei die Schwenkachse des Auslenkelements an dem Befestigungselement angebracht ist; und wobei das Befestigungselement eine Ausnehmung zum Durchführen des fibrillierten Bändchens aufweist, wobei ein Bereich der Ausnehmung des Befestigungselements das Begrenzungselement bildet.

Mithilfe des Befestigungselements wird die Anbringung des Auslenkelements mit seiner Schwenkachse an die Hohlwelle erleichtert. Weiterhin kann auf einfache Art und Weise das Begrenzungselement bereitgestellt werden.

Gemäß einer weiteren Ausführungsform ist das Auslenkelement flächig ausgebildet und weist eine Ausnehmung zum Durchführen des fibrillierten Bändchens auf, wobei ein Bereich der Ausnehmung des Auslenkelements den Auslenkbereich bildet.

Dadurch kann das Bändchen gut durch das Auslenkelement bzw. die Hohlwelle und das Befestigungselement geführt werden und gleichzeitig der Auslenkbereich bereitgestellt werden.

Gemäß einer weiteren Ausführungsform ist die Ausnehmung des Befestigungselements um die zentrale Drehachse der Hohlwelle angeordnet; wobei in einer Ruheposition des Auslenkelements, in der sich die Hohlwelle nicht dreht, die Ausnehmung des Auslenkelements und die Ausnehmung des Befestigungselements übereinander angeordnet sind und die Durchführfläche bilden; und wobei in der Auslenkposition des Auslenkelements, in der sich die Hohlwelle dreht, die Ausnehmung des Auslenkelements so verschoben zu der Ausnehmung des Befestigungselements ist, dass die Durchführfläche verringert ist.

Dabei wird bevorzugt die Durchführfläche in der Ruheposition so groß gewählt, dass das flache und fibrillierte Bändchen zu Beginn des Verdrehens ohne Hängenbleiben durch die Hohlwelle, das Befestigungselement und das Auslenkelement geführt werden kann. Zum Beispiel ist in dieser Ausführungsform das Einschießen des Bändchens mit Luft möglich. Dadurch dass die Durchführfläche dann verringert wird, wird die erfindungsgemäße Verformung beim Verdrehen ohne zusätzliche Elemente bereitgestellt.

Gemäß einer weiteren Ausführungsform ist die Ausnehmung des Auslenkelements im Wesentlichen kreisförmig gebildet; wobei die Ausnehmung des Befestigungselements im Wesentlichen kreisförmig gebildet ist und eine zusätzliche Kerbung aufweist, wobei die Kerbung das Begrenzungselement bildet.

Die kreisförmige Ausbildung der Ausnehmungen erleichtert das Einführen des Bändchens. Durch die Form der zusätzlichen Kerbung können die Durchführfläche und damit die gewünschte Verformung weiter eingestellt werden.

Gemäß einer weiteren Ausführungsform weist das Befestigungselement wenigstens ein Stoppelement zur Begrenzung der Auslenkung des Auslenkelements auf.

Ein erstes Stoppelement kann die Auslenkung des Auslenkelements in der Ruheposition begrenzen, sodass die Ausnehmungen des Auslenkelements und des Befestigungselements gleichmäßig um die Drehachse der Hohlwelle angeordnet sind. Ein zweites Stoppelement kann die Auslenkung des Auslenkelements in der Auslenkposition begrenzen, sodass die Durchführfläche und damit die gewünschte Verformung vorher bestimmt sind.

Gemäß einer Ausführungsform umfasst ein System zum Verdrehen eines flachen, fibrillierten Bändchens für die Herstellung eines Kunstrasens, eine Vorrichtung nach einer der obigen Ausführungsformen; und Führungsmittel zum fortlaufenden Durchführen des fibrillierten Bändchens durch die um deren zentrale Drehachse drehbare Hohlwelle.

Dieses System stellt eine äußerst gleichmäßige Verdrehung und Verformung des flachen und fibrillierten Bändchens bereit.

Gemäß einer Ausführungsform ist die Hohlwelle zumindest teilweise innerhalb einer Garnspule mit Umwindegarn anordenbar und sind Führungsmittel zum Umschlingen des verdrehten und verformten Bändchens mit dem Umwindegarn von der Garnspule eingerichtet.

Dadurch dass die Garnspule außen auf der Hohlwelle angeordnet ist, kann die Garnspule von der Hohlwelle gleichzeitig mit angetrieben werden, wobei das Umwindegarn auf der Garnspule dann zum Fixieren des verdrehten und verformten Bändchens genutzt wird. Weiterhin kann durch das Umschlingen mit dem Umwindegarn die Verformung des Bändchens weiter verstärkt werden.

Gemäß einer Ausführungsform umfasst das System ferner eine Aufwickelvorrichtung zum Aufwickeln des mit dem Umwindegarn umschlungenen Bändchens.

Dadurch dass die Verdrehung und Verformung des Bändchens mit dem Umwindegarn fixiert wurde, kann das Bändchen aufgewickelt werden und somit vorab produziert und gelagert werden. Das Bändchen muss somit nicht zusätzlich unmittelbar vor dem Tufting-Prozess verformt werden, wodurch sich der Tufting-Prozess vereinfacht, kostengünstig und mit weniger Vorrichtungen bewerkstelligen lässt.

Gemäß einer Ausführungsform umfasst ein Verfahren zum Verdrehen eines fibrillierten Bändchens für die Herstellung eines Kunstrasens: Bereitstellen eines Systems nach einer der obigen Ausführungsformen; fortlaufendes Durchführen des fibrilliertes Bändchens mittels der Führungsmittel durch die Hohlwelle; und Drehen der Hohlwelle, so dass sich das Auslenkelement in der Auslenkposition befindet und das fibrillierte Bändchen mit dem Auslenkbereich auf der konzentrischen Kreisbahn um die zentrale Drehachse geführt und verformt wird.

Dieses Verfahren stellt eine äußerst gleichmäßige Verdrehung und Verformung des flachen und fibrillierten Bändchens bereit.

Gemäß einer Ausführungsform ist die Hohlwelle zumindest teilweise innerhalb einer Garnspule mit Umwindegarn angeordnet und das Verfahren umfasst ferner: Umschlingen des fibrillierten und verdrehten Bändchens mit dem Umwindegarn, nachdem das Bändchen auf der konzentrischen Bahn geführt wurde.

Dadurch dass die Garnspule zumindest teilweise innerhalb der Hohlwelle angeordnet ist, kann die Garnspule von der Hohlwelle gleichzeitig mit angetrieben werden, wobei das Umwindegarn auf der Garnspule dann zum Fixieren des verdrehten und verformten Bändchens genutzt wird. Weiterhin kann durch das Umschlingen mit dem Umwindegarn die Verformung des Bändchens weiter verstärkt werden.

Gemäß einer Ausführungsform umfasst das Verfahren ferner: Aufwickeln des mit dem Umwindegarn umschlungenen Bändchens.

Dadurch dass die Verdrehung und Verformung des Bändchens mit dem Umwindegarn fixiert wurde, kann das Bändchen aufgewickelt werden und somit vorab produziert und gelagert werden. Das Bändchen muss somit nicht unmittelbar vor dem Tufting-Prozess zusätzlich verformt werden, wodurch sich der Tufting-Prozess vereinfacht, kostengünstig und mit weniger Vorrichtungen bewerkstelligen lässt.

Gemäß einer Ausführungsform ist in einer der obigen Ausführungsformen die Drehgeschwindigkeit, mit der das Umwindegarn um das verdrehte und verformte Bändchen umschlungen wird, gleich der Drehgeschwindigkeit der Hohlwelle.

Dadurch kann das verdrehte und verformte Bändchen besonders gut und gleichmäßig mit dem Umwindegarn umschlungen werden, sodass auf einfache Art und Weise eine vorteilhafte Fixierung des verdrehten und verformten Bändchens erreicht wird.

### Figurenbeschreibung

Ausführungsformen der Erfindung werden nachstehend anhand der Figuren beschrieben. Dabei zeigen:
Figur 1 ein Ausführungsbeispiel der erfindungsgemäßen Vorrichtung in einer perspektivischen Ansicht;
Figur 2 einen Teil der erfindungsgemäßen Vorrichtung von Figur 1 in einer Ruheposition in einer Draufsicht;
Figur 3 einen Teil der erfindungsgemäßen Vorrichtung von Figur 1 in einer Auslenkposition in einer Draufsicht;
Figur 4 ein Ausführungsbeispiel des erfindungsgemäßen Systems in einer Ruheposition in einer perspektivischen Ansicht; und
Figur 5 ein Ausführungsbeispiel des erfindungsgemäßen Systems in einer Auslenkposition in einer perspektivischen Ansicht.

### Detaillierte Beschreibung

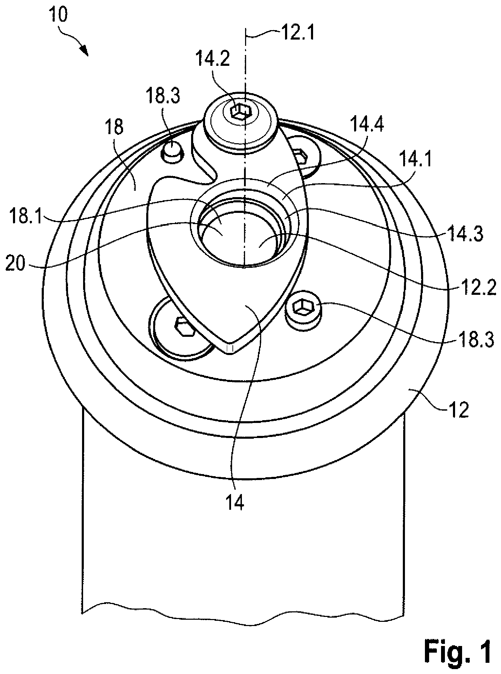

Figur 1 zeigt ein Ausführungsbeispiel einer erfindungsgemäßen Vorrichtung 10 zum Verdrehen eines flachen, fibrillierten Bändchens 22 für die Herstellung eines Kunstrasens, die eine Hohlwelle 12 mit einer zentralen Drehachse 12.1 in ihrem Hohlraum 12.2, ein Auslenkelement 14 und ein Befestigungselement 18 umfasst.

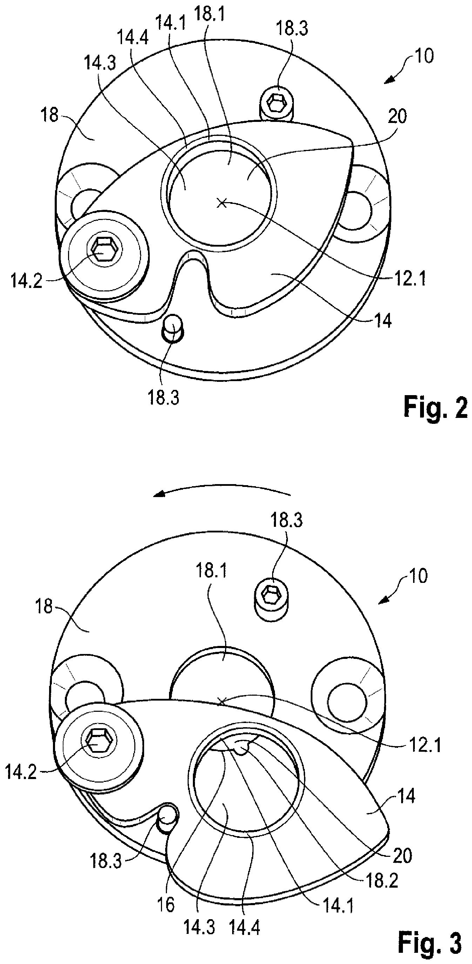

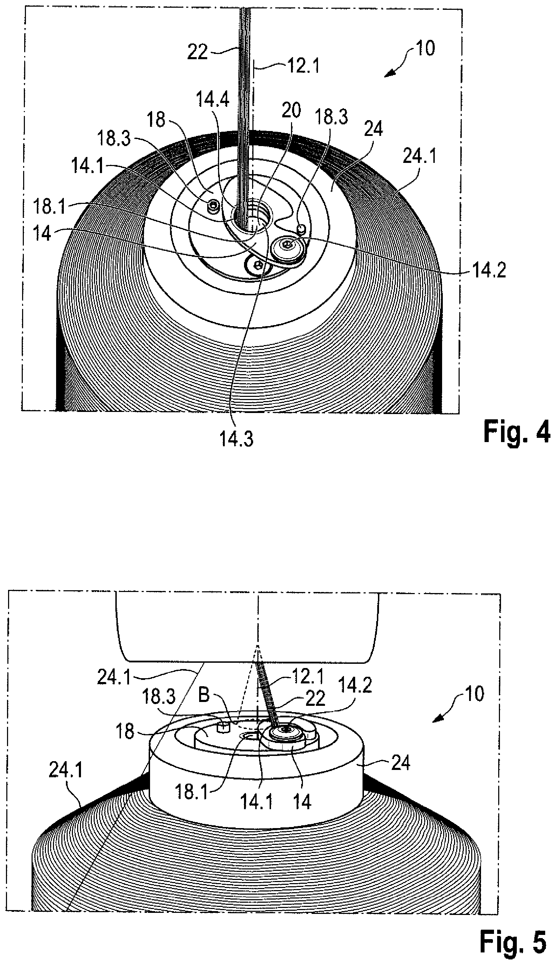

Das Befestigungselement 18 ist beispielsweise flächig gebildet und mit zwei Schrauben an einem Austrittssende der Hohlwelle 12, aus dem das fortlaufende Bändchen 22 aus der Hohlwelle 12 austritt, angebracht. Das Befestigungselement 18 ist im Wesentlichen orthogonal zur zentralen Drehachse 12.1 ausgerichtet. Darüber hinaus weist das Befestigungselement 18 eine Ausnehmung 18.1 auf, die deutlicher in den Figuren 3 und 5 zu sehen ist.

Die Ausnehmung 18.1 kann darüber hinaus eine kreisförmige Abflachung aufweisen (nicht gezeigt). Diese Abflachung ist beispielsweise auf der Seite angeordnet, die zur Hohlwelle 12 zeigt. Die Innenfläche der Ausnehmung 18.1 verläuft im Bereich der Abflachung dann nicht parallel zur Drehachse 12.1, sondern ist gegenüber der Drehachse 12.1 gewinkelt angeordnet. Damit wird das fortlaufende Führen bzw. das Einführen des Bändchens durch die Ausnehmung 18.1 erleichtert.

Das Auslenkelement 14 ist über eine Schwenkachse 14.2 mit dem Befestigungselement 18 verbunden. Ferner weist das Auslenkelement 14 eine Ausnehmung 14.3 auf.

Ein Teil der Ausnehmung 14.3 bildet einen Auslenkbereich 14.1. An diesem Auslenkbereich 14.1 liegt wie in Figur 5 zu sehen in einer Auslenkposition des Auslenkelements 14 das Bändchen 22 an.

Die Ausnehmung 14.3 des Auslenkelements 14 kann ebenso wie die Ausnehmung 18.1 des Befestigungselements 18 wenigstens eine kreisförmige Abflachung 14.4 aufweisen. Die Abflachung 14.4 kann auf der Seite angeordnet sein, die von der Hohlwelle 12 weg zeigt. Eine zweite Abflachung kann aber auch auf der Seite angeordnet sein, die zur Hohlwelle 12 hin zeigt (nicht gezeigt). Im Auslenkbereich 14.1 können die Abflachungen auf beiden oder nur auf einer der beiden Seiten stärker abgeflacht sein, um das Bändchen 22 noch besser führen zu können.

Das Befestigungselement 18 weist ferner in diesem Ausführungsbeispiel zwei Stoppelemente 18.3 auf, die die Auslenkung des Auslenkelements 14 in eine Ruheposition und in eine Auslenkposition begrenzen.

Die Figuren 2 und 3 zeigen zur Veranschaulichung in einer Draufsicht nur das Befestigungselement 18 und das Auslenkelement 14 in der Ruheposition (Figur 2) und in der Auslenkposition (Figur 3).

In Figur 2 dreht sich die Hohlwelle 12 nicht um ihre zentrale Drehachse 12.1. Dabei befindet sich das Auslenkelement 14 in der Ruheposition. Die Ausnehmungen 14.3 und 18.1 sind in dieser Ruheposition vorzugsweise konzentrisch und übereinander um die zentrale Drehachse 12.1 angeordnet. Dadurch wird eine vergrößerte Durchführfläche 20 gebildet, durch die sehr gut das flache und fibrillierte Bändchen 22 durchgeführt werden kann. Vorzugsweise ist diese vergrößerte Durchführfläche 20 so groß, dass das Bändchen 22 mit Luft durchgeschossen werden kann. Das Anfahren des Verdrehungsprozesses mit dem Einschießen des Bändchens 22 durch Luft ist produktionstechnisch besonders vorteilhaft.

In Figur 3 dreht sich die Hohlwelle 12 um ihre zentrale Drehachse 12.1 in Pfeilrichtung. Durch die resultierende Zentrifugalkraft wird das Auslenkelement 14 in die Auslenkposition gelenkt. In Figur 3 ist ein Rand der Ausnehmung 18.1 des Befestigungselements 18 zu sehen, der in diesem Fall ein Begrenzungselement 16 bildet. In diesem Bereich weist die Ausnehmung 18.1 des Befestigungselements 18 vorzugsweise eine zusätzliche Kerbung 18.2 auf.

In der Auslenkposition des Auslenkelements 14 ist die Durchführfläche 20 zwischen dem Begrenzungselement 16 und dem Auslenkbereich 14.1 im Vergleich zu der Ruheposition verkleinert. Vorzugsweise ist die Durchführfläche 20 in der Auslenkposition des Auslenkelements 14 so dimensioniert, dass das flache und fibrillierte Bändchen 22 verformt wird, wenn es durch die Durchführfläche 20 geführt bzw. gezogen wird.

Die Figuren 4 und 5 zeigen die erfindungsgemäße Vorrichtung 10 in einem System, das darüber hinaus das fibrillierte Bändchen 22 und eine Garnspule 24 mit Umwindegarn 24.1 aufweist. Die Hohlwelle 12 ist dabei zumindest teilweise in der Garnspule 24 aufgenommen. Figur 4 zeigt das System in der Ruheposition ohne Drehung der Hohlwelle 12 mit der Garnspule 24. Figur 5 zeigt das System in der Auslenkposition, bei der sich die Hohlwelle 12 mit der Garnspule 24 dreht.

In der Auslenkposition liegt das Bändchen 22 an dem Auslenkbereich 14.1 an und wird wie in Figur 5 gezeigt mit dem Auslenkbereich 14.1 zum Begrenzungselement 16 geführt, bis es auch an diesem anliegt. Die Masse des Auslenkelements 14 wird so gewählt, dass die resultierende Zentrifugalkraft ausreichend ist, um das fortlaufend geführte Bändchen 22 nach außen zu drücken.

Da das Bändchen 22 fortlaufend durch die Hohlwelle 12 mit bekannten Führungsmitteln (Rollen, Antrieben etc., nicht gezeigt) geführt wird, wird es durch die verringerte Durchführfläche 20 verformt. Da das Bändchen 22 am Begrenzungselement 16 anliegt, ist es in diesem Bereich von der zentralen Drehachse 12.1 der Hohlwelle 12 versetzt. Durch die Drehbewegung der erfindungsgemäßen Vorrichtung 10 wird das Bändchen 22 somit auf einer Kreisbahn B parallel zur Auslenkebene des Auslenkelements 14 geführt. Das Bändchen 22 wird durch die Führungsmittel hin zu einem Führungspunkt (nicht gezeigt) über einem Austrittsende der Hohlwelle 12 geführt. Folglich wird das Bändchen 22 durch die kreisförmige Bewegung auf der Kreisbahn B zusätzlich verdreht. Anders ausgedrückt bewegt sich das Bändchen 22 somit über dem Austrittsende der Hohlwelle 12 im Wesentlichen auf einer Kegelfläche (gestrichelte Linien). In dem Führungspunkt wird das Bändchen 22 fortlaufend so fixierend geführt, dass sich die Verdrehung bzw. Verformung im Wesentlichen nicht wieder entfaltet.

Durch die Drehbewegung wird zusätzlich von der Garnspule 24 das Umwindegarn 24.1 vorzugsweise über Kopf abgezogen und im Bereich des Führungspunkts um das verdrehte und verformte Bändchen 22 umschlungen. Diese Umschlingung mit dem Umwindegarn 24.1 fixiert den Zustand der Verdrehung und Verformung des Bändchens 22.

Danach kann das fixierte Bändchen 22 vorzugsweise auf eine Spule etc. aufgewickelt werden und zur Tufting-Anlage transportiert werden. Somit kann das Bändchen 22 örtlich und zeitlich getrennt von der Tufting-Anlage für den Tufting-Prozess vorbereitet werden, wodurch sich weitere logistische Vorteile und Kostenvorteile ergeben.

Dabei ist es besonders vorteilhaft, wenn die Drehgeschwindigkeit, mit der das Umwindegarn 24.1 um das verdrehte und verformte Bändchen 22 umschlungen wird, gleich der Drehgeschwindigkeit der Hohlwelle (12) ist.

Allgemein kann das Auslenkelement 14 auch im Hohlraum 12.2 der Hohlwelle 12 angeordnet sein (nicht gezeigt). In einer anderen Ausführungsform (nicht gezeigt) ist es auch vorstellbar, dass das Auslenkelement 14 direkt an der Hohlwelle 12 angebracht ist und ein innerer Bereich der Hohlwelle 12 das Begrenzungselement 16 bildet. Diese vereinfachte Ausführungsform benötigt nicht die Befestigung über das Befestigungselement 18 und die Führung bzw. Verformung durch die Kerbung 18.2. Je nach Bändchenart 22 und Drehgeschwindigkeit ist deshalb möglich, diese erfindungsgemäße Ausführungsform anzuwenden.

### Bezugszeichenliste

- 10: Vorrichtung

- 12: Hohlwelle
- 12.1: Drehachse
- 12.2: Hohlraum

- 14: Auslenkelement
- 14.1: Auslenkbereich
- 14.2: Schwenkachse
- 14.3: Ausnehmung
- 14.4: Abflachung

- 16: Begrenzungselement

- 18: Befestigungselement
- 18.1: Ausnehmung
- 18.2: Kerbung
- 18.3: Stoppelement

- 20: Durchführfläche

- 22: fibrilliertes Bändchen

- 24: Garnspule
- 24.1: Umwindegarn

- B: Bahn

## Patentansprüche

1. Vorrichtung (10) für ein System zum Verdrehen eines flachen, fibrillierten Bändchens (22) für die Herstellung eines Kunstrasens, umfassend
eine Hohlwelle (12) mit einer zentralen Drehachse (12.1) im Hohlraum (12.2) der Hohlwelle (12),
wobei die Hohlwelle (12) derart gestaltet ist, dass das flache, fibrillierte Bändchen (22) fortlaufend durch den Hohlraum (12.2) der Hohlwelle (12) durchführbar ist;
ein an der Hohlwelle (12) angebrachtes, schwenkbar gelagertes Auslenkelement (14) mit einem Auslenkbereich (14.1),
w obei eine Schwenkachse (14.2) des Auslenkelements (14) von der zentralen Drehachse (12.1) der Hohlwelle (12) so versetzt angeordnet ist, dass der Auslenkbereich (14.1) des Auslenkelements (14) bei einer Drehung der Hohlwelle (12) um deren zentrale Drehachse (12.1) durch die resultierende Zentrifugalkraft nach außen von der zentralen Drehachse (12.1) weg in eine Auslenkposition ausgelenkt ist, wodurch das flache, fibrillierte Bändchen (22) an dem Auslenkbereich (14.1) anliegt und von dem Auslenkbereich (14.1) auf einer konzentrischen Bahn (B) um die zentrale Drehachse (12.1) geführt ist; und
ein Begrenzungselement (16), das so an der Hohlwelle (12) angeordnet ist, dass das flache, fibrillierte Bändchen (22) in der Auslenkposition des Auslenkelements (14) auch an dem Begrenzungselement (16) anliegt und die Auslenkung des flachen, fibrillierten Bändchens nach außen dadurch begrenzt ist,
w obei in der Auslenkposition eine im Wesentlichen orthogonal zur zentralen Drehachse (12.1) ausgerichtete Durchführfläche (20) zwischen dem Auslenkbereich (14.1) und dem Begrenzungselement (16) derart gestaltet ist, dass das flache, fibrillierte Bändchen (22) beim Durchführen durch die Durchführfläche (20) verformt wird.

2. Vorrichtung (10) nach Anspruch 1, ferner umfassend ein flächiges Befestigungselement (18) zur Anbringung des Auslenkelements (14) an die Hohlwelle (12),
wobei das Befestigungselement (18) an einem Austrittssende der Hohlwelle (12), aus dem das fortlaufende Bändchen (22) aus der Hohlwelle (12) austritt, angebracht ist und im Wesentlichen orthogonal zur zentralen Drehachse (12.1) ausgerichtet ist; wobei die Schwenkachse (14.2) des Auslenkelements (14) an dem Befestigungselement (18) angebracht ist; und
wobei das Befestigungselement (18) eine Ausnehmung (18.1) zum Durchführen des fibrillierten Bändchens (22) aufweist,
wobei ein Bereich der Ausnehmung (18.1) des Befestigungselements (18) das Begrenzungselement (16) bildet.

3. Vorrichtung (10) nach Anspruch 2,
wobei das Auslenkelement (14) flächig ausgebildet ist und eine Ausnehmung (14.3) zum Durchführen des fibrillierten Bändchens (22) aufweist, wobei ein Bereich der Ausnehmung (14) des Auslenkelements (14) den Auslenkbereich (14.1) bildet.

4. Vorrichtung (10) nach Anspruch 3,
wobei die Ausnehmung (18.1) des Befestigungselements (18) um die zentrale Drehachse (12.1) der Hohlwelle (12) angeordnet ist;
wobei in einer Ruheposition des Auslenkelements (14), in der sich die Hohlwelle (12) nicht dreht, die Ausnehmung (14.3) des Auslenkelements (14) und die Ausnehmung (18.1) des Befestigungselements (18) übereinander angeordnet sind und die Durchführfläche (20) bilden; und
wobei in der Auslenkposition des Auslenkelements (14), in der sich die Hohlwelle (12) dreht, die Ausnehmung (14.3) des Auslenkelements (14) so verschoben zu der Ausnehmung (18.1) des Befestigungselements (18) ist, dass die Durchführfläche (20) verringert ist.

5. Vorrichtung (10) nach Anspruch 4,
wobei die Ausnehmung (14.3) des Auslenkelements (14) im Wesentlichen kreisförmig gebildet ist; und
wobei die Ausnehmung (18.1) des Befestigungselements (18) im Wesentlichen kreisförmig gebildet ist und eine zusätzliche Kerbung (18.2) aufweist,
wobei die Kerbung (18.2) das Begrenzungselement (16) bildet.

6. Vorrichtung (10) nach einem der vorhergehenden Ansprüche 2 bis 5,
wobei das Befestigungselement (18) wenigstens ein Stoppelement (18.3) zur Begrenzung der Auslenkung des Auslenkelements (14) aufweist.

7. System zum Verdrehen eines flachen, fibrillierten Bändchens (22) für die Herstellung eines Kunstrasens, umfassend
eine Vorrichtung (10) nach einem der Ansprüche 1 bis 6; und
Führungsmittel zum fortlaufenden Durchführen eines fibrillierten Bändchens (22) durch die um deren zentrale Drehachse (12.1) drehbare Hohlwelle (12).

8. System nach Anspruch 7,
wobei die Hohlwelle (12) zumindest teilweise innerhalb einer Garnspule (24) mit Umwindegarn (24.1) anordenbar ist, und bevorzugt die Garnspule (24) außen auf der Hohlwelle (12) anordenbar ist, sodass die Garnspule (24) gleichzeitig von der Hohlwelle (12) angetrieben wird; und
wobei Führungsmittel zum Umschlingen des verdrehten und verformten Bändchens (22) mit dem Umwindegarn (24.1) von der Garnspule (24) eingerichtet sind.

9. System nach Anspruch 8, ferner umfassend
eine Aufwickelvorrichtung zum Aufwickeln des mit dem Umwindegarn (24.1) umschlungenen Bändchens (22).

10. System nach einem der Ansprüche 8 bis 9, wobei die Drehgeschwindigkeit, mit der das Umwindegarn (24.1) um das verdrehte und verformte Bändchen (22) umschlungen wird, gleich der Drehgeschwindigkeit der Hohlwelle (12) ist.

11. Verfahren zum Verdrehen eines flachen, fibrillierten Bändchens (22) für die Herstellung eines Kunstrasens, umfassend:
Bereitstellen eines Systems nach einem der Ansprüche 7 bis 9;
fortlaufendes Durchführen des fibrilliertes Bändchens (22) mittels der Führungsmittel durch die Hohlwelle (12); und
Drehen der Hohlwelle (12), so dass sich das Auslenkelement (14) in der Auslenkposition befindet und das fibrillierte Bändchen mit dem Auslenkbereich (14.1) auf der konzentrischen Kreisbahn um die zentrale Drehachse (12.1) geführt und verformt wird.

12. Verfahren nach Anspruch 11, wobei die Hohlwelle (12) zumindest teilweise innerhalb einer Garnspule (24) mit Umwindegarn (24.1) angeordnet ist und das Verfahren ferner umfasst:
Umschlingen des verdrehten und verformten Bändchens (22) mit dem Umwindegarn (24.1).

13. Verfahren nach Anspruch 12, ferner umfassend: Aufwickeln des mit dem Umwindegarn (24.1) umschlungenen Bändchens (22).

14. Verfahren nach einem der Ansprüche 12 bis 13,
wobei die Drehgeschwindigkeit, mit der das Umwindegarn (24.1) um das verdrehte und verformte Bändchen (22) umschlungen wird, gleich der Drehgeschwindigkeit der Hohlwelle (12) ist.

## Claims

1. A device (10) for a system for twisting a flat, fibrillated strip (22) for producing artificial turf, comprising
a hollow shaft (12) with a central axis of rotation (12.1) in the hollow space (12.2) of the hollow shaft (12),
wherein the hollow shaft (12) is designed such that the flat, fibrillated strip (22) can be continuously passed through the hollow space (12.2) of the hollow shaft (12);
a swingably mounted deflecting element (14) fitted to the hollow shaft (12), which has a "swing region" (14.1),
wherein a swing pivot (14.2) of the deflecting element (14) is arranged offset from the central axis of rotation (12.1) of the hollow shaft (12) such that, upon a rotation of the hollow shaft (12) about its central axis of rotation (12.1), the "swing region" (14.1) of the deflecting element is swung outward from the central axis of rotation (12.1), into a "swung-out position" (deflecting position), by the resulting centrifugal force, whereby the flat, fibrillated strip (22) rests against the "swing region"(14.1) and is guided from (by) the "swing region" (14.1) in a concentric path (B) about the central axis of rotation (12.1); and
a limiting element (16) which is arranged on the hollow shaft (12) such that, when the deflecting element (14) is in its swung-out position, the flat, fibrillated strip (22) also rests against the limiting element (16), whereby the outward deflection of the flat fibrillated strip (22) is limited,
wherein, in the swung-out position, a passage area (20), aligned substantially orthogonally to the central axis of rotation (12.1), is configured between the "swing region" (14.1) and the limiting element (16) such that the flat, fibrillated strip (22) is deformed when it passes through the passage area (20).

2. The device (10) according to claim 1, further comprising a flat attaching element (18) for attaching the deflecting element (14) to the hollow shaft (12),
wherein the attaching element (18) is mounted on an exit end of the hollow shaft (12) from which end the advancing fibrillated strip (22) emerges from the hollow shaft (12) and is aligned substantially orthogonally to the central axis of rotation (12.1);
wherein the swing pivot (14.2) of the deflecting element (14) is attached to the attaching element (18); and
wherein the attaching element (18) has an opening (18.1) for the through-passage of the fibrillated strip (22),
wherein an area of the opening (18.1) of the attaching element (18) forms the limiting element (16).

3. The device (10) according to claim 2,
wherein the deflecting element (14) has a flat configuration, and has an opening (14.3) for the through-passage of the fibrillated strip (22), wherein a region of the opening (14) of the deflecting element (14) forms the "swing region" (14.1).

4. The device (10) according to claim 3,
wherein the opening (18.1) of the attaching element (18) is arranged about the central axis of rotation (12.1) of the hollow shaft (12);
wherein, when the deflecting element (14) is in the idle position, with the hollow shaft (12) not rotating, the opening (14.3) of the deflecting element (14) and the opening (18.1) of the attaching element (18) are stacked and form the passage area (20); and
wherein, when the deflecting element (14) is in the swung-out position, with the hollow shaft (12) rotating, the opening (14.3) of the deflecting element (14) is displaced with respect to the opening (18.1) of the attaching element (18) such that the passage area (20) is reduced.

5. The device (10) according to claim 4,
wherein the opening (14.3) of the deflecting element (14) is formed substantially circular; and
wherein the opening (18.1) of the attaching element (18) is formed substantially circular and has an additional notch (18.2),
wherein the notch (18.2) forms the limiting element (16).

6. The device (10) according to one of preceding claims 2 to 5,
wherein the attaching element (18) has at least one stop element (18.3) for limiting the swinging (e.g. swinging-out) of the deflecting element (14).

7. A system for twisting a flat, fibrillated strip (22) for producing artificial turf, comprising
a device (10) according to one of claims 1 to 6; and
guide means for continuously passing a fibrillated strip (22) through the hollow shaft (12) which can be rotated about its central axis (12.1).

8. The system according to claim 7,
wherein the hollow shaft (12) can be arranged at least partly inside a yarn bobbin (24) with wrapping yarn (24.1), and preferably the yarn bobbin (24) can be arranged externally on the hollow shaft (12), with the result that the yarn bobbin (24) is driven simultaneously by the hollow shaft (12); and
wherein guide means are set up for wrapping the wrapping yarn (24.1) from the yarn bobbin (24) around the twisted and deformed strip (22).

9. The system according to claim 8, further comprising
a winding device for winding the strip (22) which strip has the wrapping yarn (24.1) wrapped around it.

10. The system according to one of claims 8 to 9,
wherein the rotational speed with which the wrapping yarn (24.1) is wrapped around the twisted and deformed fibrillated strip (22) is equal to the rotational speed of the hollow shaft (12).

11. A method of twisting a flat, fibrillated strip (22) for producing artificial turf, comprising:
providing a system according to one of claims 7 to 9;
continuously passing the fibrillated strip (22) through the hollow shaft (12) by means of the guide means; and
rotating the hollow shaft (12), such that the deflecting element (14) is disposed in the swung-out position, and such that the fibrillated strip is guided, by means of the "swing region" (14.1), in the circular concentric path about the central axis of rotation (12.1), and is deformed.

12. The method according to claim 11,
wherein the hollow shaft (12) is arranged at least partly inside a yarn bobbin (24) which bears wrapping yarn (24.1) and the method further comprises:
wrapping the wrapping yarn (24.1) around the twisted and deformed fibrillated strip (22).

13. The method according to claim 12, further comprising:
winding the fibrillated strip (22) which has been wrapped with the wrapping yarn (24.1).

14. The method according to one of claims 12 to 13,
wherein the rotational speed with which the wrapping yarn (24.1) is wrapped around the twisted and deformed fibrillated strip (22) is equal to the rotational speed of the hollow shaft (12).

## Revendications

1. Dispositif (10) pour un système destiné à faire tourner une bandelette (22) fibrillée plate pour la fabrication d'un gazon artificiel, comprenant
un arbre creux (12) avec un axe de rotation (12.1) central dans l'espace creux (12.2) de l'arbre creux (12),
l'arbre creux (12) étant formé de telle sorte que la bandelette (22) plate fibrillée peut être introduite en continu à travers l'espace creux (12.2) de l'arbre creux (12) ;
un élément de déviation (14) mis en place sur l'arbre creux (12) et supporté en pivotement, avec une zone de déviation (14.1),
un axe de pivotement (14.2) de l'élément de déviation (14) étant disposé de façon décalée par rapport à l'axe de rotation (12.1) central de l'arbre creux (12) de telle sorte que la zone de déviation (14.1) de l'élément de déviation (14) est, lors d'une rotation de l'arbre creux (12) autour de son axe de rotation (12.1) central, déviée vers l'extérieur par la force centrifuge résultante qui l'éloigne de l'axe de rotation (12.1) central vers une position de déviation, ce qui fait que la bandelette (22) fibrillée plate est adjacente à la zone de déviation (14.1) et est guidée à partir de la zone de déviation (14.1) sur une trajectoire concentrique (B) autour de l'axe de rotation (12.1) central ; et
un élément de limitation (16), qui est disposé sur l'arbre creux (12) de telle sorte que, dans la position de déviation de l'élément de déviation (14), la bandelette (22) fibrillée plate est également adjacente à l'élément de limitation (16) et de ce fait la déviation de la bandelette fibrillée plate vers l'extérieur est limitée,
une surface de passage (20) orientée essentiellement à angle droit par rapport à l'axe de rotation (12.1) central entre la zone de déviation (14.1) et l'élément de limitation (16), étant, dans la position de déviation, formée de telle sorte que la bandelette (22) plate fibrillée est déformée lors du passage à travers la surface de passage (20).

2. Dispositif (10) selon la revendication 1, comprenant également un élément de fixation (18) plan destiné à la mise en place de l'élément de déviation (14) sur l'arbre creux (12),
l'élément de fixation (18) étant mis en place à une extrémité de sortie de l'arbre creux (12) à partir de laquelle la bandelette (22) continue sort de l'arbre creux (12), et étant orienté essentiellement à angle droit par rapport à l'axe de rotation (12.1) central ;
l'axe de pivotement (14.2) de l'élément de déviation (14) étant mis en place sur l'élément de fixation (18) ; et
l'élément de fixation (18) présentant un creux (18.1) destiné au passage de la bandelette (22) fibrillée,
une zone du creux (18.1) de l'élément de fixation (18) formant l'élément de limitation (16).

3. Dispositif (10) selon la revendication 2, l'élément de déviation (14) étant constitué de façon plane et présentant un creux (14.3) destiné au passage de la bandelette (22) fibrillée, une zone du creux (14) de l'élément de déviation (14) formant la zone de déviation (14.1).

4. Dispositif (10) selon la revendication 3,
le creux (18.1) de l'élément de fixation (18) étant disposé autour de l'axe de rotation (12.1) central de l'arbre creux (12) ;
le creux (14.3) de l'élément de déviation (14) et le creux (18.1) de l'élément de fixation (18) étant, dans une position de repos de l'élément de déviation (14) dans laquelle l'arbre creux (12) ne tourne pas, disposés l'un au-dessus de l'autre et formant la surface de passage (20) ; et
le creux (14.3) de l'élément de déviation (14) étant, dans la position de déviation de l'élément de déviation (14) dans laquelle l'arbre creux (12) tourne, déplacé vers le creux (18.1) de l'élément de fixation (18) de telle sorte que la surface de passage (20) est réduite.

5. Dispositif (10) selon la revendication 4,
le creux (14.3) de l'élément de déviation (14) étant formé essentiellement de façon circulaire ; et
le creux (18.1) de l'élément de fixation (18) étant formé essentiellement de façon circulaire et présentant une encoche (18.2) supplémentaire, l'encoche (18.2) formant l'élément de limitation (16).

6. Dispositif (10) selon l'une des revendications précédentes 2 à 5,
l'élément de fixation (18) présentant au moins un élément d'arrêt (18.3) destiné à limiter la déviation de l'élément de déviation (14).

7. Système destiné à faire tourner une bandelette (22) fibrillée plate pour la fabrication d'un gazon artificiel, comprenant
un dispositif (10) selon l'une des revendications 1 à 6 ; et
des moyens de guidage destinés au passage continu d'une bandelette (22) fibrillée à travers l'arbre creux (12) qui peut tourner autour de son axe de rotation (12.1) central.

8. Système selon la revendication 7,
l'arbre creux (12) pouvant être disposé au moins partiellement à l'intérieur d'une bobine de fil (24) avec du fil guipé (24.1), et de préférence la bobine de fil (24) pouvant être disposée à l'extérieur sur l'arbre creux (12) de telle sorte que la bobine de fil (24) est simultanément entraînée par l'arbre creux (12) ; et
des moyens de guidage destinés à l'enroulement de la bandelette (22) tournée et déformée avec le fil guipé (24.1) étant agencés.

9. Système selon la revendication 8, comprenant également
un dispositif de bobinage destiné au bobinage de la bandelette (22) enroulée avec le fil guipé (24.1).

10. Système selon l'une des revendications 8 à 9, la vitesse de rotation à laquelle le fil guipé (24.1) est enroulé autour de la bandelette (22) tournée et déformée étant égale à la vitesse de rotation de l'arbre creux (12).

11. Procédé destiné à faire tourner une bandelette (22) fibrillée plate pour la fabrication d'un gazon artificiel, comprenant :
la fourniture d'un système selon l'une des revendications 7 à 9 ;
le passage continu de la bandelette (22) fibrillée au moyen des moyens de guidage à travers l'arbre creux (12) ; et
la rotation de l'arbre creux (12) de telle sorte que l'élément de déviation (14) se trouve dans la position de déviation, et la bandelette fibrillée avec la zone de déviation (14.1) est guidée sur la trajectoire circulaire concentrique autour de l'axe de rotation (12.1) central et déformée.

12. Procédé selon la revendication 11,
l'arbre creux (12) étant disposé au moins partiellement à l'intérieur d'une bobine de fil (24) avec du fil guipé (24.1), et le procédé comprenant également :
l'enroulement de la bandelette (22) tournée et déformée avec le fil guipé (24.1).

13. Procédé selon la revendication 12, comprenant également :
le bobinage de la bandelette (22) sur laquelle est enroulé le fil guipé (24.1).

14. Procédé selon l'une des revendications 12 à 13,
la vitesse de rotation à laquelle le fil guipé (24.1) est enroulé autour de la bandelette (22) tournée et déformée étant égale à la vitesse de rotation de l'arbre creux (12).
